# EUROPEAN PATENT SPECIFICATION

(11) **EP 3 811 750 B1**
(45) Date of publication and mention of the grant of the patent: **14.02.2024**
(21) Application number: 18924442.9
(22) Date of filing: 27.12.2018
(51) Int. Cl.: A01B 69/04, B60K 35/00, B60W 50/14, B60W 60/00, G05D 1/00

(54) **WORK VEHICLE**
NUTZFAHRZEUG
VÉHICULE DE TRAVAIL

(30) Priority: 25.06.2018 JP 2018120247
(43) Date of publication of application: 28.04.2021
(73) Proprietor: KUBOTA CORPORATION, Osaka-shi, Osaka 556-8601 (JP)
(72) Inventor: MIYASHITA, Shunsuke, Sakai-shi, Osaka 590-0823 (JP); KOBAYASHI, Kumiko, Sakai-shi Osaka 590-0823 (JP); KAWAI, Misako, Sakai-shi Osaka 590-0823 (JP); MORIOKA, Yasuaki, Sakai-shi Osaka 590-0823 (JP); NISHINO, Kunihiko, Sakai-shi Osaka 590-0823 (JP)
(74) Representative: Bittner, Thomas L.
(86) International application number: PCT/JP2018/048061
(87) International publication number: WO 2020/003561

(56) References cited:
- CN-A- 107 535 147
- JP-A- H0 678 604
- JP-A- H09 128 044
- JP-A- H09 128 044
- JP-A- S63 240 707
- JP-A- S63 240 707
- JP-A- 2004 350 545
- JP-A- 2016 007 196
- JP-A- 2016 007 196
- JP-A- 2016 024 541
- JP-A- 2017 123 803
- JP-A- 2017 134 471
- JP-A- 2018 075 027
- US-A1- 2007 255 470

## Description

The present invention relates to a working vehicle.

### Background

Document JP 2017-123803 discloses a conventional agricultural working machine. The agricultural working machine of Patent Document 1 is provided with a traveling body capable of switching between manual traveling by manual steering and automatic traveling by automatic steering along a set traveling line parallel to a reference traveling line, and a changeover switch capable of switching between the manual traveling and the automatic traveling. In addition, the agricultural working machine sets a starting point of the reference traveling line after pressing a right indicator button while traveling along the ridges, and sets an end point of the reference traveling line by pressing a left indicator button while traveling. That is, the reference traveling line is set before the automatic steering.

In the agricultural machine of Document JP 2017-123803, the automatic traveling can be easily performed by switching from the manual driving to the automatic traveling with a changeover switch. For a working vehicle such as a tractor different from a rice transplanter, the timing of starting and finishing the work varies depending on the implements and other factors, and thus it may be difficult to determine the timing of starting and finishing the automatic operation when the working vehicle is operated with the automatic operation.

The document JP 2016 007196 A discloses a planting/sowing paddy working machine that includes a positioning unit with a GNSS module and outputting the positioning data of a machine body. The machine includes a work completion informing part for notifying that the machine body reaches a work end position, when it is detected that the machine body reaches the work end position to complete the planting of seedlings to a paddy. The machine includes a work start informing part for notifying that the machine body reaches a work starting position, when it is detected that the machine body reaches the work starting position to start the planting of seedlings to the paddy.

According to the disclosure of the document JP H09-128044 A, a lawn mower has a steering wheel and a driving wheel to be driven by an engine and cuts the grass by cutter units. Various sensors including an optical fiber gyro for detecting the yaw angle of a vehicle body and a controller are mounted on the body and autonomous traveling can be attained based upon previously applied map information. An operator sitting on a driver's seat of the body can execute steering and acceleration work by using a steering and the operation of the cutter units by using a lever.

The document JP S63-240707 A discloses a running control apparatus of an automatic running working vehicle.

The document CN 107 535 147 A relates to a work vehicle which can set a work running route to a field and can high precisely set the work running route. The work vehicle comprises an acquisition part which can acquire position data of periphery of the field. The work vehicle also comprises a work setting part which can set the work running route of a running vehicle to the field according to the position data.

The document JP 2016-024541 A describes a traveling work machine and automatic steering system used therein.

### Summary

In view of the above problems, the present invention is intended to provide a working vehicle capable of allowing an operator to easily switch automatic steering between to be started and to be finished.

To solve the problem, a working vehicle according to the independent claim 1 is provided. Further, a method for operating a working vehicle is provided. Embodiments are the subject matter of dependent claims in the appended set of claims.

According to the present invention, an operator is allowed to easily switch automatic steering between to be started and to be finished.

### Description of embodiments

Following, further embodiments are described with reference to the figures. In the figures,
- FIG. 1: is a view illustrating a control block diagram and configuration of a tractor.
- FIG. 2: is an explanation view explaining automatic steering.
- FIG. 3A: is an explanation view explaining a correction amount in a push switch.
- FIG. 3B: is an explanation view explaining a correction amount in a sliding switch.
- FIG. 4A: is a view illustrating a first corrector portion and a second corrector portion in a push switch.
- FIG. 4B: is a view illustrating a first corrector portion and a second corrector portion in a sliding switch.
- FIG. 5A: is a view illustrating a state where a calculated body position is offset rightward during straight traveling in automatic steering.
- FIG. 5B: is a view illustrating a state where a calculated body position is offset leftward during straight traveling in automatic steering.
- FIG. 6: is a view of a cover provided in front of an operator seat, which is seen from an operator seat side.
- FIG. 7: is an explanation view explaining controls in automatic steering.
- FIG. 8: is a view illustrating an example of a traveling line where an agricultural work is performed in an agricultural field.
- FIG. 9: is a view illustrating a traveling line where a tractor travels forward and backward alternately.
- FIG. 10: is a view illustrating an example of a field screen M1.
- FIG. 11: is a whole view of a tractor.

Hereinafter, an embodiment of the present invention will be described with appropriate reference to the drawings.

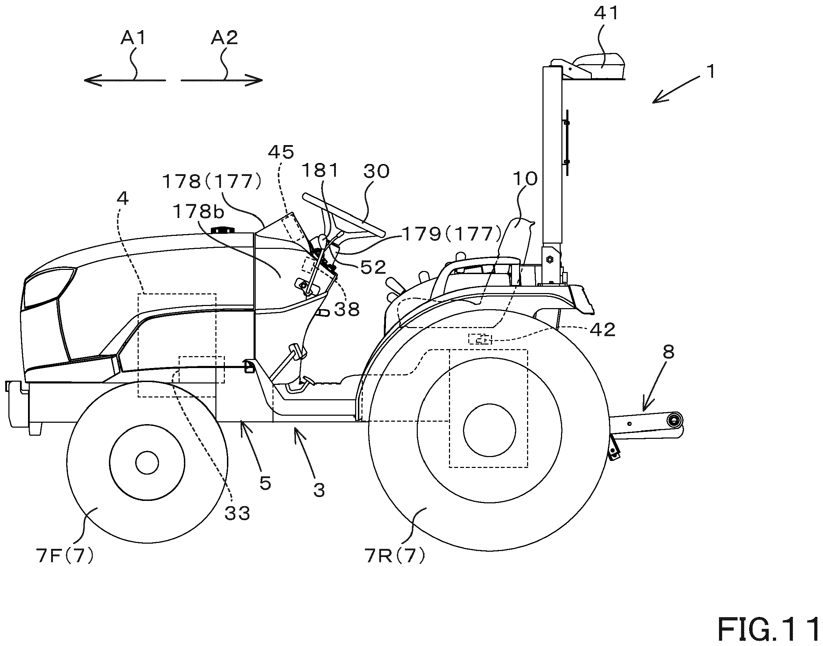

FIG. 11 is a side view illustrates an embodiment of the working vehicle 1, and FIG. 11 is a plan view illustrates the embodiment of the working vehicle 1. In this embodiment, the working vehicle 1 is a tractor. However, the working vehicle 1 is not limited to a tractor and may be an agricultural machine (agricultural vehicle) such as a combine or a transplanter, or construction equipment (construction vehicle) such as a loader working machine.

In the following description, the front side of an operator seated on an operator seat 10 of the tractor (working vehicle) 1 (a direction of an arrowed line A1 in FIG. 11) will be referred to as the front, the rear side of the operator (a direction of an arrowed line A2 in FIG. 11) will be referred to as the rear, the left side of the operator will be referred to as the left, and the right side of the operator will be referred to as the right. The horizontal direction, which is a direction orthogonal to the front-to-back direction of the working vehicle 1, is referred to as a vehicle width direction.

As shown in FIG. 11, the tractor 1 is provided with a vehicle body 3, a prime mover 4, and a speed-shifter device 5. The vehicle body 3 has a traveling device 7, which allows the vehicle body 3 to travel. The traveling device 7 is a device having a front wheel 7F and a rear wheel 7R. The front wheels 7F may be tire-type or crawler-type. The rear wheels 7R also may be tire-type or crawler-type.

The prime mover 4 is constituted of a diesel engine, an electric motor or the like, the prime mover 4 is the diesel engine in this embodiment. The speed-shifter device 5 is capable of switching the propulsion of the traveling device 7 by shifting gears and also of switching the traveling device 7 between the forward traveling and the backward traveling. The vehicle body 3 is provided with the operator seat 10.

The rear portion of the vehicle body 3 is provided with a coupler portion 8 consisting of a three-point linkage mechanism or the like. A working device can be attached to and detached from the coupler portion 8. By connecting the working device to the coupler portion 8, the working device can be towed by the vehicle body 3. The working device includes a cultivator device for tilling, a fertilizer sprayer device for spraying fertilizer, a pesticide sprayer device for spraying pesticides, a harvester device for harvesting, a mower device for harvesting grasses and the like, a tedder device for diffusing grasses and the like, a raking device for collecting grasses and the like, and a baler device for molding grasses and the like.

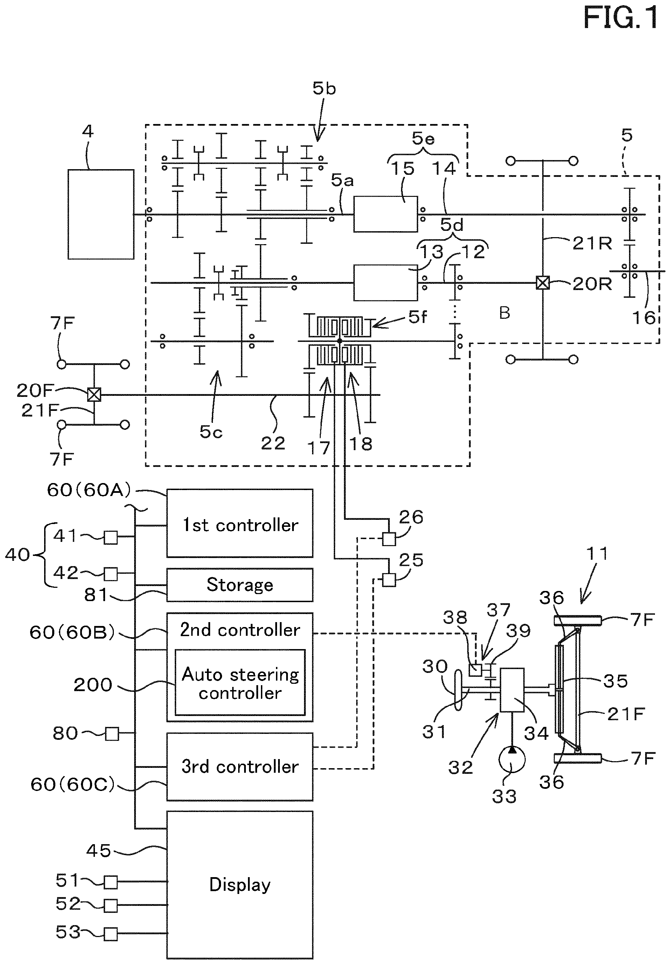

As shown in FIG. 1, the speed-shifter device 5 is provided with a main shaft (propulsion shaft) 5a, a main speed-shifter portion 5b, a sub speed-shifter portion 5c, a shuttle portion 5d, a PTO power transmission 5e, and a front speed-shifter portion 5f. The propulsion shaft 5a is rotatably supported in a housing case (transmission case) of the speed-shifter device 5, and power from the crankshaft of the prime mover 4 is transmitted to the propulsion shaft 5a. The main speed-shifter portion 5b has a plurality of gears and a shifter for changing the engagement of the gears. The main speed-shifter portion 5b changes the rotation input from the propulsion shaft 5a and outputs (shifts the speed) by changing the connection (engagement) of the plurality of gears with the shifter accordingly.

The sub speed-shifter portion 5c, like the main speed-shifter portion 5b, has a plurality of gears and a shifter for changing the engagement of the gears. By changing the connection (engagement) of the plurality of gears with the shifter as appropriate, the sub speed-shifter portion 5c changes the rotation input from the main speed-shifter portion 5b and outputs the changed rotation (speed shifting).

The shuttle portion 5d has a shuttle shaft 12 and a forward/backward switching portion 13. The power output from the sub speed-shifter portion 5c is transmitted to the shuttle shaft 12 via gears and other devices. The forward/backward switching portion 13 includes, for example, a hydraulic clutch or the like, and switches the direction of rotation of the shuttle shaft 12, that is, the forward movement and backward movement of the tractor 1, by engaging and disengaging the hydraulic clutch. The shuttle shaft 12 is connected to a rear wheel differential device 20R. The rear wheel differential device 20R rotatably supports the rear axle 21R on which the rear wheel 7R is mounted.

The PTO power transmission 5e has a PTO propulsion shaft 14 and a PTO clutch 15. The PTO propulsion shaft 14 is rotatably supported, and the power from the propulsion shaft 5a can be transferred from the propulsion shaft 5a. The PTO propulsion shaft 14 is connected to the PTO shaft 16 via the gears and the like. The PTO clutch 15 includes, for example, a hydraulic clutch and the like, and is switched between a state where the power of the propulsion shaft 5a is transferred to the PTO propulsion shaft 14 and a state where the power of the propulsion shaft 5a is not transferred to the PTO propulsion shaft 14.

The front speed-shifter device 5f has a first clutch 17 and a second clutch 18. The first clutch 17 and the second clutch are capable of transmitting power from the propulsion shaft 5a, for example, the power of the shuttle shaft 12 is transmitted via the gears and the transmission shaft. The power from the first clutch 17 and the second clutch 18 can be transmitted to the front axle 21F via the front transmission shaft 22. In particular, the front transmission shaft 22 is connected to a front wheel differential device 20F, which rotatably supports the front axle 21F on which the front wheels 7F are mounted.

The first clutch 17 and the second clutch 18 include a hydraulic clutch or the like. A fluid line is connected to the first clutch 17, and the fluid line is connected to a first actuator valve 25, to which the hydraulic fluid discharged from the hydraulic pump is supplied. The first clutch 17 is switched between an engaged state and a disengaged state depending on the degree of opening of the first actuator valve 25. A fluid line is connected to the second clutch 18, and the fluid line is connected to a second actuator valve 26. The second clutch 18 is switched between an engaged state and a disengaged state depending on the degree of opening of the second actuator valve 26. The first and second actuation valves 25 and 26 are, for example, two-position switching valves with solenoid valves, which are switched to an engaged state or a disengaged state by magnetization or demagnetization of the solenoid valve solenoids.

When the first clutch 17 is disengaged and the second clutch 18 is engaged, the power of the shuttle shaft 12 is transmitted to the front wheels 7F through the second clutch 18. This results in four-wheel driving (4WD) in which the front and rear wheels are driven by the power and the rotation speed of the front and rear wheels is substantially the same (4WD constant speed state). On the other hand, when the first clutch 17 is engaged and the second clutch 18 is disengaged, four-wheel driving is provided and the rotation speed of the front wheel becomes higher than that of the rear wheel (4WD constant speed state). When the first and second clutches 17 and 18 are disengaged, the power of the shuttle shaft 12 is not transmitted to the front wheels 7F, and thus the vehicle becomes two-wheel drive (2WD) with the rear wheels driven by power.

The tractor 1 is provided with a positioning device 40. The positioning device 40 is capable of detecting its own position (positioning information including latitude and longitude) by a satellite positioning system (positioning satellite) such as D-GPS, GPS, GLONASS, HOKUTO, GALILEO, MICHIBIKI, and the like. That is, the positioning device 40 receives satellite signals transmitted by the positioning satellite (such as the position of the positioning satellite, transmission time, correction information, and the like) and detects its position (for example, latitude and longitude) based on the satellite signals. The positioning device 40 has a receiver device 41 and an inertial measurement device (IMU: Inertial Measurement Unit) 42. The receiver device 41 has an antenna or the like and receives satellite signals transmitted from a positioning satellite, and is attached to the vehicle body 3 separately from the inertial measurement unit 42. In this embodiment, the receiver device 41 is attached to a ROPS provided to the vehicle body 3. The attachment location of the receiver device 41 is not limited to that of this embodiment.

The inertial measurement device 42 has an acceleration sensor to detect acceleration, a gyroscope to detect angular velocity, and so forth. The vehicle body 3, for example, is installed below the operator seat 10, and the roll angle, pitch angle, yaw angle, and the like of the vehicle body 3 can be detected by the inertial measurement device 42.

As shown in FIG. 1, the tractor 1 is provided with a steering device 11. The steering device 11 is a device capable of performing manual steering to steer the body of the vehicle body 3 by the operator and automatic steering to steer the body of the vehicle body 3 automatically without the operator's operation.

The steering device 11 has a steering handle (steering wheel) 30 and a steering shaft (rotating shaft) 31 that rotatably supports the steering handle 30. The steering device 11 also has an assist mechanism (power steering device) 32. The assist mechanism 32 assists the rotation of the steering shaft 31 (steering handle 30) by hydraulic or other means. The assist mechanism 32 includes a hydraulic pump 33, a control valve 34 to which the hydraulic fluid discharged from the hydraulic pump 33 is supplied, and a steering cylinder 35 operated by the control valve 34. The control valve 34 is, for example, a three-position switching valve that can be switched by movement of a spool or the like, and is switched in response to the steering direction (direction of rotation) of the steering shaft 31. The steering cylinder 35 is connected to an arm (knuckle arm) 36 that changes the direction of the front wheels 7F.

Thus, when the operator grasps the steering wheel 30 and operates the steering wheel 30 in one direction or the other, the switching position and opening degree of the control valve 34 will be switched according to the direction of rotation of the steering wheel 30, and the steering cylinder 35 will stretch and shorten to the left or right according to the switching position and opening degree of the control valve 34. The direction of steering of the front wheels 7F can be changed by the steering wheel 30. In other words, the vehicle body 3 can change the direction of travel to the left or right by manual steering of the steering handle 30.

Next, automatic steering will be explained.

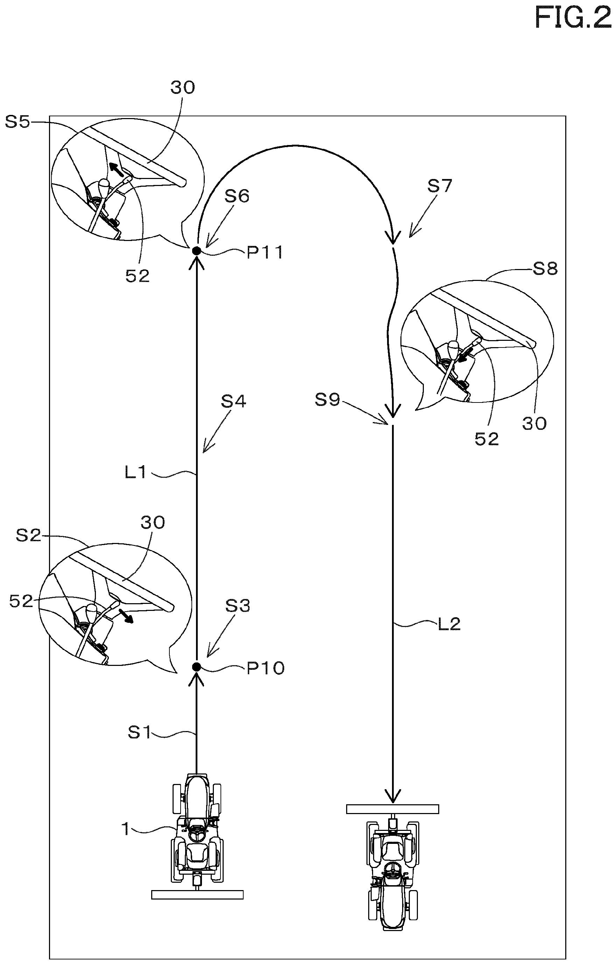

As shown in FIG. 2, when automatic steering is performed, first, a traveling reference line L1 is set before automatic steering is performed. After the traveling reference line L1 is set, the automatic steering can be performed by setting the scheduled traveling line L2, which is parallel to the traveling reference line L1. The automatic steering automatically steers the tractor 1 (vehicle body 3) in the direction of traveling so that the vehicle position measured by the positioning device 40 and the scheduled traveling line L2 coincide.

In particular, when the tractor 1 (vehicle body 3) is moved to a predetermined position in the work field prior to the automatic steering (S1), and at the predetermined position, the operator operates the steering changeover switch 52 provided on the tractor 1 (step S2), the vehicle position measured by the positioning device 40 is set at the start point P10 of the traveling reference line L1 (step S3). When the tractor 1 (vehicle body 3) is moved from the start point P10 of the traveling reference line L1 (step S4) and the operator operates the steering changeover switch 52 at the predetermined position (step S5), the vehicle position measured by the positioning device 40 is set at the end point P11 of the traveling reference line L1 (step S6). Thus, a straight line connecting the start point P10 and the end point P11 is set as the traveling reference line L1.

After setting the traveling reference line L1 (after step S6), for example, when the tractor 1 (vehicle body 3) is moved to a different location than where the traveling reference line L1 was set (step S7) and the operator operates the steering changeover switch 52 (step S8), the scheduled traveling line L2, which is a straight line parallel to the traveling reference line L1, is set (step S9). After the scheduled traveling line L2 is set, the automatic steering is started and the direction of traveling of the tractor 1 (vehicle body 3) is changed so that it follows the scheduled traveling line L2. For example, when the current vehicle position is on the left side of the scheduled traveling line L2, the front wheel 7F is steered to the right, and when the current vehicle position is on the right side of the scheduled traveling line L2, the front wheel 7F is steered to the left. During the automatic steering, the travel speed (vehicle speed) of the tractor 1 (vehicle body 3) can be changed by the operator manually changing the amount of operation of the gas pedal members (accelerator pedal and gas pedal lever) provided in the tractor 1, or by changing the gear shift of the speed shifter (transmission).

After the start of the automatic steering, the automatic steering can be terminated when the operator operates the steering changeover switch 52 at any point. That is, the end point of the scheduled traveling line L2 can be set by the end of the automatic steering by operating the steering changeover switch 52. In other words, the length of the end point of the scheduled traveling line L2 can be set longer or shorter than the traveling reference line L1. In other words, the scheduled traveling line L2 is not associated with the length of the traveling reference line L1, and the scheduled traveling line L2 allows the vehicle to travel a longer distance than the length of the traveling reference line L1 under the automatic steering.

As shown in FIG. 1, the steering device 11 has an automatic steering mechanism 37. The automatic steering mechanism 37 is a mechanism for the automatic steering of the vehicle body 3 and automatically steers the vehicle body 3 based on the position of the vehicle body 3 (vehicle position) detected by the positioning device 40. The automatic steering mechanism 37 is provided with a steering motor 38 and a gear mechanism 39. The steering motor 38 is a motor whose rotational direction, rotational speed, rotational angle, and the like can be controlled based on the vehicle position. The gear mechanism 39 includes a gear provided on the steering shaft 31 and traveling in conjunction with the steering shaft 31, and a gear provided on the rotation shaft of the steering motor 38 and traveling in conjunction with the rotation shaft of the steering motor 38. When the rotation shaft of the steering motor 38 rotates, the steering shaft 31 automatically rotates (revolves) via the gear mechanism 39 to change the steering direction of the front wheels 7F so that the vehicle position coincides with the scheduled traveling line L2.

As shown in FIG. 1, the tractor 1 is provided with a display device 45. The display device 45 is capable of displaying various information about the tractor 1, at least the operation information of the tractor 1. The display device 45 is located in front of the operator seat 10.

As shown in FIG. 1, the tractor 1 is provided with a setter switch 51. The setter switch 51 is a switch that switches to a setting mode that is set at least prior to the start of the automatic steering. The setting mode is a mode for making various settings related to the automatic steering before starting the automatic steering, for example, setting a start and end point of the traveling reference line L1.

The setter switch 51 is switchable to ON or OFF, and outputs a signal that the setting mode is enabled when it is ON, and outputs a signal that the setting mode is disabled when it is OFF. The setter switch 51 also outputs a signal to the display device 45 that the setting mode is enabled when it is ON, and outputs a signal to the display device 45 that the setting mode is disabled when it is OFF.

The tractor 1 is provided with the steering changeover switch 52. The steering changeover switch 52 is a switch that switches the start or end of the automatic steering. In particular, the steering changeover switch 52 is switchable from the neutral position to up, down, forward, or backward, and issues a start of the automatic steering when switched downward from the neutral position with the setting mode enabled, and issues an end of the automatic steering when switched upward from the neutral position with the setting mode enabled. The steering changeover switch 52 also issues to set the current vehicle position to the start point P10 of the traveling reference line L1 when switched from the neutral position to the rear with the setting mode enabled, and the steering changeover switch 52 issues to set the current vehicle position to the end point P11 of the traveling reference line L1 when switched from the neutral position to the front with the setting mode enabled.

The tractor 1 is provided with a corrector switch 53. The corrector switch 53 is a switch that corrects the vehicle position (latitude and longitude) measured by the positioning device 40. That is, the corrector switch 53 corrects the vehicle position (called the calculated vehicle position) calculated with the satellite signal (position of the positioning satellite, transmission time, correction information, and the like) and the measurement information (acceleration, angular velocity) measured by the inertial measurement device 42.

The corrector switch 53 includes a push switch or a slide switch, which can be pressed or slidable. Hereinafter, a case in which the corrector switch 53 is a push switch and a case in which the corrector switch 53 is a slide switch respectively will be described.

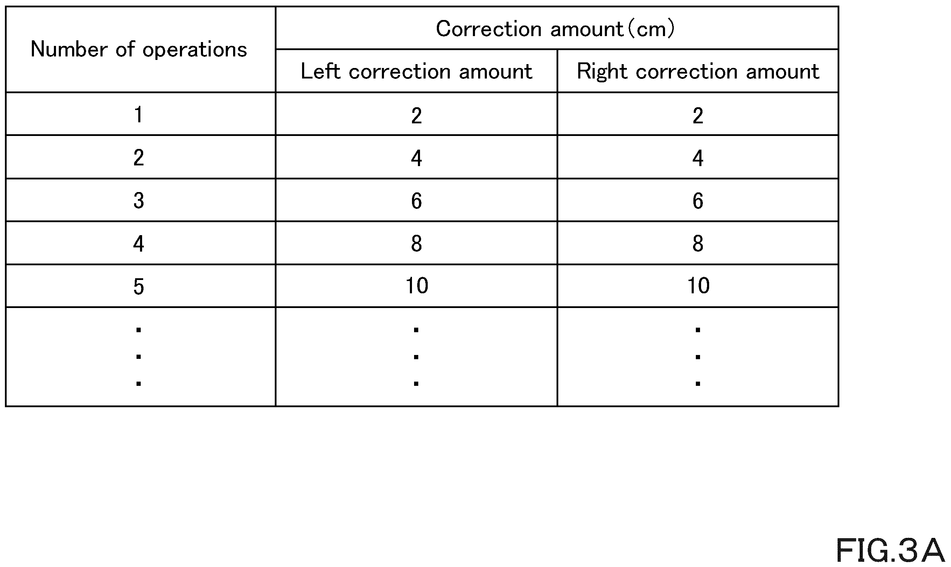

When the corrector switch 53 is a push switch, the correction amount is set based on the number of operations of the push switch. The correction amount is determined by the following formula: correction amount = number of operations × correction amount per operation count. For example, as shown in FIG. 3A, each operation of the push switch increases the amount of correction by a few centimeters or tens of centimeters. The number of operations of the push switch is input to the first controller device 60A, and the first controller device 60A sets (calculates) the correction amount based on the number of operations.

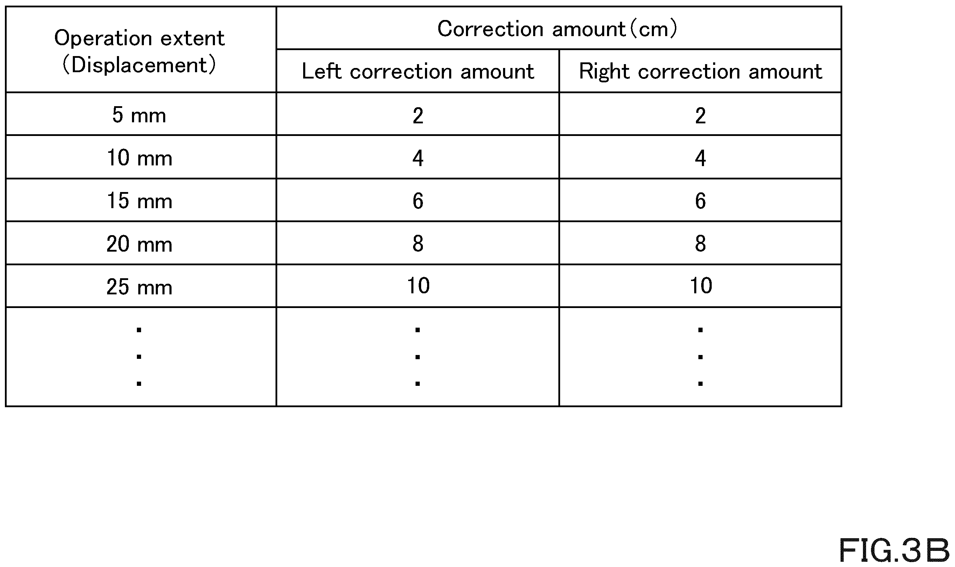

When the corrector switch 53 is a slide switch, the amount of correction is set based on the amount of operation (displacement amount) of the slide switch. For example, the correction amount is determined by the correction amount = the amount of displacement from a predetermined position. For example, as shown in FIG. 3B, for every 5mm increase in the displacement of the slide switch, the amount of correction is increased by a few centimeters or tens of centimeters. The amount of operation of the slide switch (displacement amount) is input to the first controller device 60A, and the first controller device 60A sets (calculates) the correction amount based on the displacement amount. The method of increasing the correction amount and the rate of increase is not limited to the values described above.

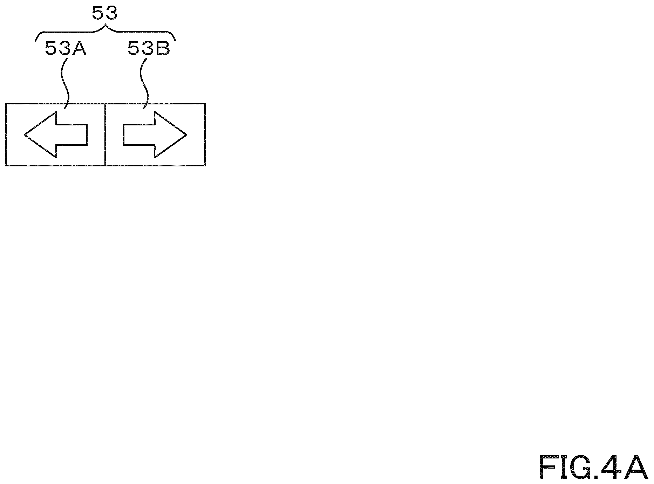

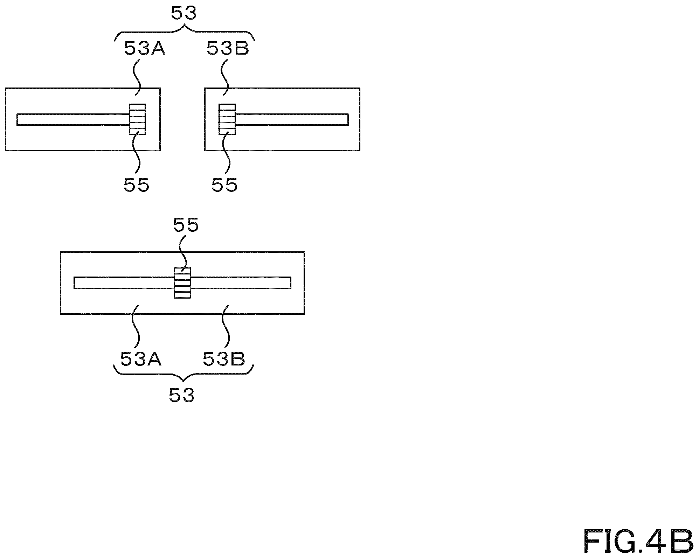

In detail, as shown in FIG. 4A and FIG. 4B, the corrector switch 53 has a first corrector portion 53A and a second corrector portion 53B. The first corrector portion 53A is the part that commands correction of the vehicle position corresponding to one side, that is, the left side, of the vehicle body 3 in the width direction. The second corrector portion 53B is the part that commands correction of the vehicle position corresponding to the other side in the width direction of the vehicle body 3, that is, the right side.

As shown in FIG. 4A, when the corrector switch 53 is a push switch, the first corrector portion 53A and the second corrector portion 53B are on or off switches that automatically return at each operation. The switch including the first corrector portion 53A and the switch including the second corrector portion 53B are integrated with the switch including the first corrector portion 53A. The switch including the first corrector portion 53A and the switch including the second corrector portion 53B may be disposed apart from each other. As shown in FIG. 3A, each time the first corrector portion 53A is pressed, the amount of correction corresponding to the left side of the vehicle body 3 (the left correction amount) is increased. Also, each time the second corrector portion 53B is pressed, the amount of correction corresponding to the right side of the vehicle body 3 (the right correction amount) increases.

As shown in FIG. 4B, when the corrector switch 53 is a slide switch, the first and second corrector portions 53A and 53B include a pinching portion 55 that moves left or right along the longitudinal direction of the long hole. When the corrector switch 53 is a slide switch, the first and second corrector portions 53A and 53B are disposed apart from each other in the width direction. As shown in FIG. 3B, when the pinching portion 55 is gradually displaced to the left side from the predetermined reference position, the left correction amount increases in accordance with the displacement amount. When the pinching portion 55 is gradually displaced to the right side from the predetermined reference position, the right correction amount increases in accordance with the displacement amount. As shown in FIG. 4B, in the case of a slide switch, the first corrector portion 53A and the second corrector portion 53B are formed in an integrated manner, and the reference position of the pinching portion 55 is set at the center, and when the pinching portion 55 is displaced to the left from the reference position, the left correction amount is set, and when the pinching portion 55 is displaced to the right from the middle position, the right correction amount is set.

Next, the relation between the correction amount (left and right correction amounts) by the corrector switch 53, the scheduled traveling line L2, and the behavior of the tractor 1 (vehicle body 3) (traveling trajectory) will be explained.

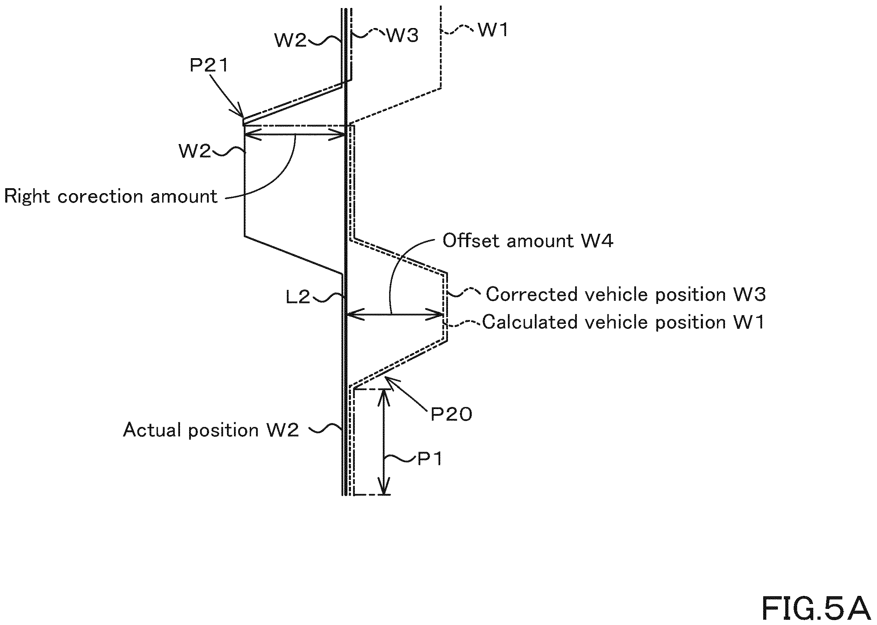

FIG. 5A shows the situation when the calculated vehicle position W1 shifts to the right during the automatic steering and straight ahead. As shown in FIG. 5A, when the automatic steering is started and the actual position of the tractor 1 (vehicle body 3) (actual position W2) is the same as the calculated vehicle position W1, and the actual position W2 is the same as the scheduled traveling line L2, the tractor 1 will travel along the scheduled traveling line L2. That is, in the sector P1 where there are no errors in the positioning of the positioning device 40 and the vehicle position (calculated vehicle position W1) detected by the positioning device 40 is the same as the actual position W2, the tractor 1 travels along the scheduled traveling line L2. When there are no errors in positioning by the positioning system 40 and no corrections are made, the calculated vehicle position W1 is the same as the corrected vehicle position (corrected vehicle position) W3, corrected by the correction amount. The corrected vehicle position W3 is calculated by the following formula: corrected vehicle position W3 = calculated vehicle position W1 - correction amount.

Here, in the vicinity of the position P20, although the actual position W2 is not out of alignment with the scheduled traveling line L2, various effects cause errors in positioning by the positioning device 40, and the vehicle position W1 detected by the positioning device 40 is shifted to the right side with respect to the scheduled traveling line L2 (actual position W2), resulting in the displacement amount (gap or deviation) W4. Then, the tractor 1 judges that there is a gap between the calculated vehicle position W1 and the scheduled traveling line L2, and steers the tractor 1 to the left so that the displacement amount W4 between the calculated vehicle position W1 and the scheduled traveling line L2 is eliminated. Then, the actual position W2 of the tractor 1 shifts to the scheduled traveling line L2 by steering left. Then, it is supposed that the operator notices that the tractor 1 has shifted from the scheduled traveling line L2 and steers the second corrector portion 53B at position P21 to increase the right correction amount from zero. The right-hand correction is added to the calculated vehicle position W1, and the corrected vehicle position W3 can be made to be substantially the same as the actual position W2. In other words, the vehicle position of the positioning system 40 can be corrected by the second corrector portion 53B in the direction to eliminate the displacement amount W4 that occurred in the vicinity of the position P20. As shown in position P21 in FIG. 5A, when the actual position W2 of the tractor 1 is far to the left of the scheduled traveling line L2 after the vehicle position correction, the tractor 1 can be steered to the right to bring the actual position W2 of the tractor 1 in line with the scheduled traveling line L2.

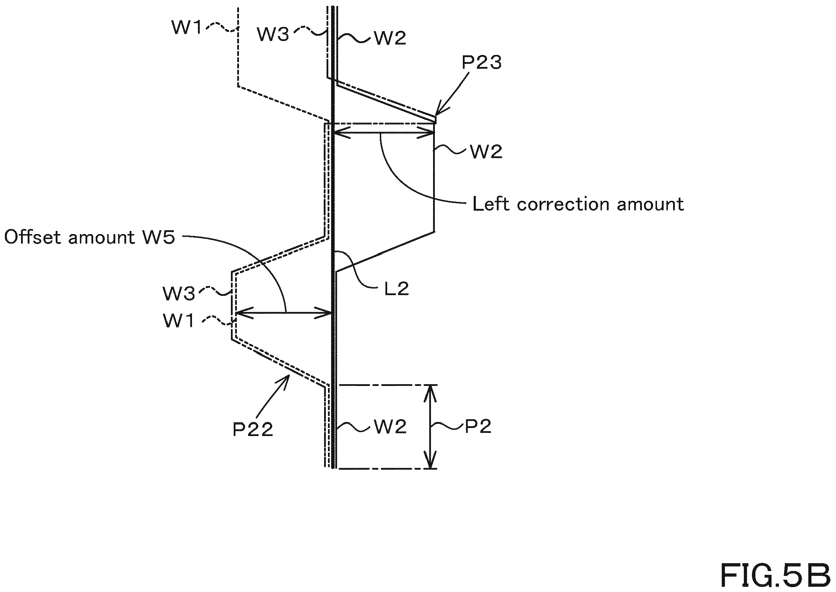

FIG. 5B shows a case in which the calculated vehicle position W1 shifts to the left while the vehicle is moving straight ahead during the automatic steering. As shown in FIG. 5B, when the actual position W2 and the calculated vehicle position W1 coincide with the actual position W2 and the scheduled traveling line L2 at the start of the automatic steering, as in FIG. 5A, the tractor 1 travels along the scheduled traveling line L2, as in FIG. 5A. That is, as in FIG. 5A, in the sector P2 where there is no error in the positioning of the positioning device 40, tractor 1 travels along the scheduled traveling line L2. Also, as in FIG. 5A, the calculated vehicle position W1 and the corrected body position W3 are the same value.

When, at position P22, due to various effects, there is an error in the positioning of the positioning device 40, and the vehicle position W1 detected by the positioning device 40 is shifted to the left side relative to the actual position W2, and the displacement amount (gap or deviation) W5 is maintained, then the tractor 1 resolves the displacement amount W5 between the calculated vehicle position W1 and the scheduled traveling line L2. The tractor 1 is steered to the right so as to do so. Then, it is supposed that the operator notices that tractor 1 is out of alignment with the scheduled traveling line L2 and the operator steers the first corrector portion 53A at position P23 to increase the left correction amount from zero. Then, the left correction amount is added to the calculated vehicle position W1, and the corrected vehicle position (corrected body position) W3 can be made substantially the same as the actual position W2. In other words, by setting the left correction amount using the first corrector portion 53A, the vehicle position of the positioning system 40 can be corrected in a direction that eliminates the displacement amount W5 that occurred in the vicinity of position P22. As shown in position P23 in FIG. 5B, when the actual position W2 of the tractor 1 is far to the right of the scheduled traveling line L2 after the vehicle position correction, the tractor 1 can be steered to the left to bring the actual position W2 of the tractor 1 in line with the scheduled traveling line L2.

Next, the setter switch 51 and the corrector switch 53 will be described.

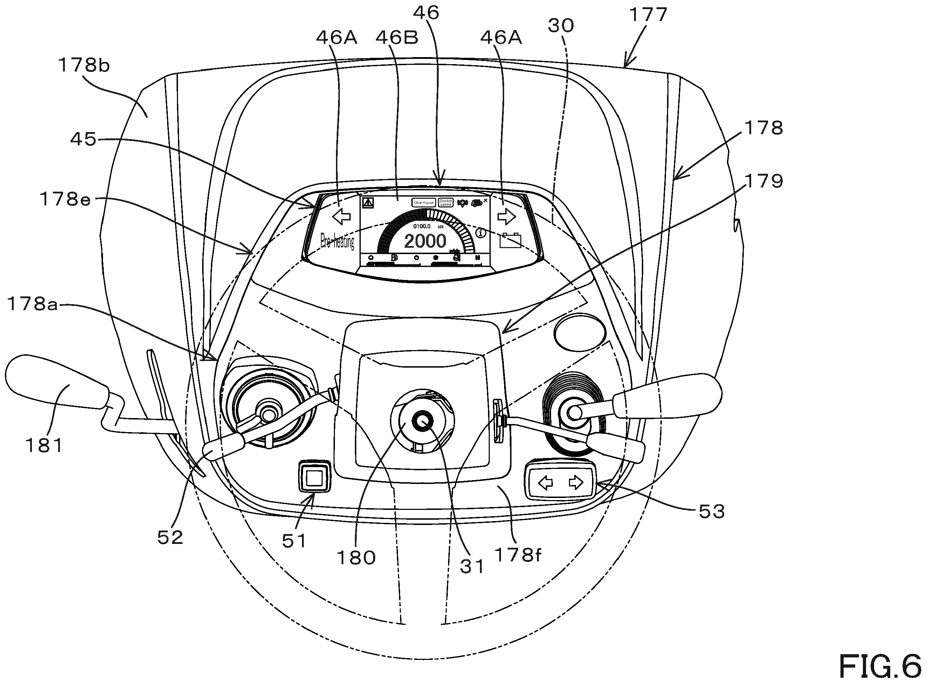

As shown in FIG. 6, the outer perimeter of the steering shaft 31 is covered by the steering post 180. The outer perimeter of the steering post 180 is covered by a cover 177. The cover 177 is provided in front of the operator seat 10. The cover 177 includes a panel cover 178 and a column cover 179.

The panel cover 178 supports the display device 45. The upper panel portion 178a of the panel cover 178 is provided with a support portion 178e that supports the display device 45. The support portion 178e supports the display device 45 in front of the steering shaft 31 and below the steering handle 30. The upper plate portion 178a has an attachment surface 178f to which the setter switch 51 and the corrector switch 53 are attached. The attachment surface 178f is located behind the support portion 178e and below the steering handle 30. The support portion 178e and the attachment surface 178f are continuous, with the support portion 178e located in front of the upper plate portion 178a and the attachment surface 178f located at the rear portion of the upper plate portion 178a. The setter switch 51 and corrector switch 53 are mounted on the attachment surface 178f. The setter switch 51 and the corrector switch 53 are thereby arranged around the steering shaft 31.

A shuttle lever 181 protrudes from the left plate portion 178b of the panel cover 178. The shuttle lever 181 is a member that switches the direction of traveling of the vehicle body 3. In more detail, by operating (pivoting) the shuttle lever 181 forward, the forward/backward switching portion 13 is in a state of outputting the forward traveling power to the traveling device 7, and the traveling direction of the vehicle body 3 is switched to a forward traveling direction. By operating (pivoting) the shuttle lever 181 backward, the forward/backward switching portion 13 outputs backward traveling power to the traveling device 7 and the traveling direction of the vehicle body 3 is switched to the backward traveling direction. When the shuttle lever 181 is in the neutral position, no power is output to the traveling device 7.

The column cover 179 is disposed below the steering wheel 30 and covers the outer perimeter of the upper portion of the steering shaft 31. The column cover 179 is formed in the shape of a substantially square cylinder and protrudes upward from the attachment surface 178f of the panel cover 178. In other words, the attachment surface 178f is provided around the perimeter of the column cover 179. Thus, the setter switch 51 and corrector switch 53 mounted on the attachment surface 178f are located around the perimeter of the column cover 179.

Next, the arrangement of the setter switch 51, the steering changeover switch 52, and the corrector switch 53 will be described in detail. As shown in FIG. 6, the setter switch 51, the steering changeover switch 52, and the corrector switch 53 are arranged around the steering shaft 31.

The setter switch 51 is located on one side (left side) of the steering shaft 31. The steering changeover switch 52 is located on one side (left side) of the steering shaft 31. In the case of this embodiment, the steering changeover switch 52 includes a pivotable lever. The steering changeover switch 52 is pivotable with a base point on the steering shaft 31 side. The base end of the steering changeover switch 52 is provided inside the column cover 179. The steering changeover switch 52 protrudes on one side (left side) of the column cover 179.

The corrector switch 53 is located on the other side (right side) of the steering shaft 31. More specifically, the corrector switch 53 is disposed on the right side and rearward (diagonally right rearward) of the steering shaft 31. The corrector switch 53 is disposed to the right and rear (diagonally right rear) of the column cover 179 in relation to the column cover 179. The corrector switch 53 is disposed at the right rear portion of the attachment surface 178f in relation to the attachment surface 178f of the panel cover 178. The fact that the corrector switch 53 is disposed at the rear portion of the inclined attachment surface 178f allows for a longer distance between the corrector switch 53 and the steering wheel 30. This can more reliably prevent unintentional operation of the corrector switch 53 and steering wheel 30.

As mentioned above, the setter switch 51, the steering changeover switch 52, and the corrector switch 53 are arranged around the steering shaft 31. In other words, the setter switch 51, the steering changeover switch 52, and the corrector switch 53 are present in a centralized location around the steering shaft 31. Thus, the operator can clearly understand the location of each switch at a glance. In addition, the operator can operate each switch without changing his or her posture while seated on the operator seat 10. As a result, the operability of the switches is improved and erroneous operation can be prevented. In addition, the harnesses (wiring) distributed from each switch can be shortened.

In addition, the above-mentioned switch arrangement may be arranged with the left and right sides interchangeable. That is, one side may be on the left and the other side on the right, or one side may be on the right and the other side on the left. In particular, for example, the setter switch 51 and the steering changeover switch 52 may be located on the right side of the steering shaft 31, and the corrector switch 53 may be located on the left side of the steering shaft 31.

As shown in FIG. 1, the tractor 1 is provided with a plurality of controller devices 60. The plurality of controller devices 60 are devices that control the traveling system, control the working system, calculate the vehicle position, and the like in the tractor 1. The plurality of controller devices 60 are a first controller device 60A, a second controller device 60B, and a third controller device 60C.

The first controller device 60A receives the satellite signal received by the receiver 41 (received information) and the measurement information (acceleration, angular velocity, and the like) measured by the inertial measurement device 42, and determines the vehicle body position based on the received information and the measurement information. For example, when the correction amount by the corrector switch 53 is zero, that is, the correction of the vehicle position by the corrector switch 53 is not commanded, the first controller device 60A does not correct the calculated vehicle position W1 calculated based on the received information and the measurement information, and determines the calculated vehicle position W1 as the vehicle position to be used for the automatic steering. On the other hand, when corrector switch 53 is commanded to correct the vehicle body position, the first controller device 60A sets the correction amount of the vehicle body position based on either the number of operations of the corrector switch 53 or the amount of operation of the corrector switch 53 (displacement amount), and then determines, as the vehicle position to be used for the automatic steering, the corrected vehicle position W3 obtained by correcting the calculated vehicle body position W1 with the correction amount.

The first controller device 60A sets a control signal based on the vehicle position (calculated vehicle position W1, corrected body position W3) and the scheduled traveling line L2, and outputs the control signal to the second controller device 60B. The second controller device 60B has an automatic steering controller portion 200. The automatic steering controller portion 200 includes an electrical and electronic circuit in the second controller device 60B, a computer program stored in a CPU, and the like. The automatic steering controller portion 200 controls the steering motor 38 of the automatic steering mechanism 37 so that the vehicle body 3 travels along the scheduled traveling line L2 based on a control signal output from the first controller device 60A.

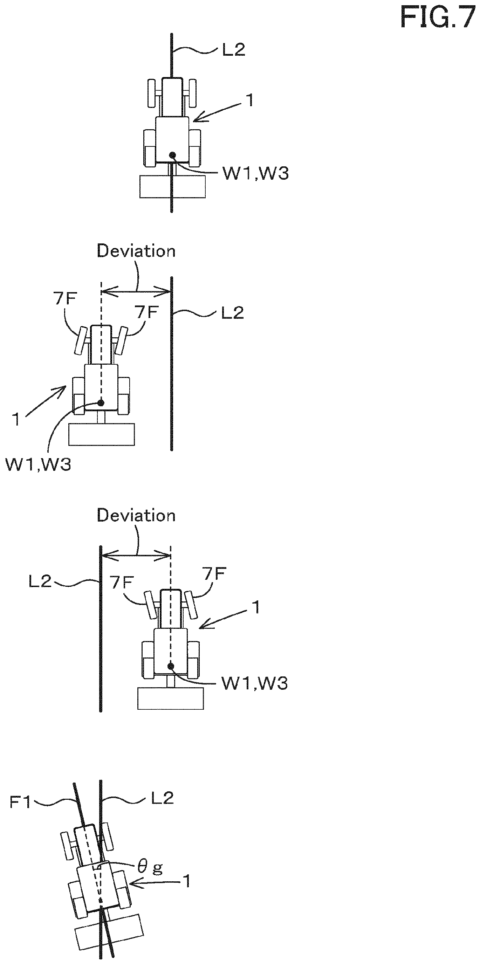

As shown in FIG. 7, when the deviation between the vehicle position and the scheduled traveling line L2 is less than a threshold value, the automatic steering controller portion 200 maintains the rotation angle of the rotation axis of the steering motor 38. When the deviation between the vehicle body position and the scheduled traveling line L2 (position deviation) is greater than or equal to the threshold value and the tractor 1 is located on the left side with respect to the scheduled traveling line L2, the automatic steering controller portion 200 rotates the rotation axis of the steering motor 38 so that the steering direction of the tractor 1 is in the right direction. When the deviation between the vehicle position and the scheduled traveling line L2 is greater than or equal to a threshold value and the tractor 1 is located on the right side with respect to the scheduled traveling line L2, the automatic steering controller portion 200 rotates the rotational axis of the steering motor 38 so that the steering direction of the tractor 1 is in a left direction. In the above-described embodiment, the steering angle of the steering device 11 is changed based on the deviation between the vehicle body position and the scheduled traveling line L2. However, when the orientation of the scheduled traveling line L2 differs from the orientation of the direction of the tractor 1 (vehicle body 3) in the direction of travel (traveling direction) (vehicle body orientation) F1, that is, the vehicle body orientation to the scheduled traveling line L2. When the angle θg of F1 is greater than or equal to a threshold value, the automatic steering controller portion 200 may set the steering angle so that the angle θg becomes zero (vehicle orientation F1 matches the orientation of the scheduled traveling line L2). The automatic steering controller portion 200 may also set a final steering angle in the automatic steering based on the steering angle obtained based on the deviation (position deviation) and the steering angle obtained based on the orientation (orientational deviation). The setting of the steering angle in the automatic steering in the above-described embodiments is an example and is not limited thereto.

The third controller device 60C raises and lowers the coupler portion 8 in response to the operation of an operating member provided around the operator seat 10. The first controller device 60A, the second controller device 60B and the third controller device 60C may be integrated. The control of the traveling system, the control of the working system, and the calculation of the vehicle position as described above are not limited.

As described above, the tractor 1 (vehicle body 3) can be steered automatically by the controller device 60.

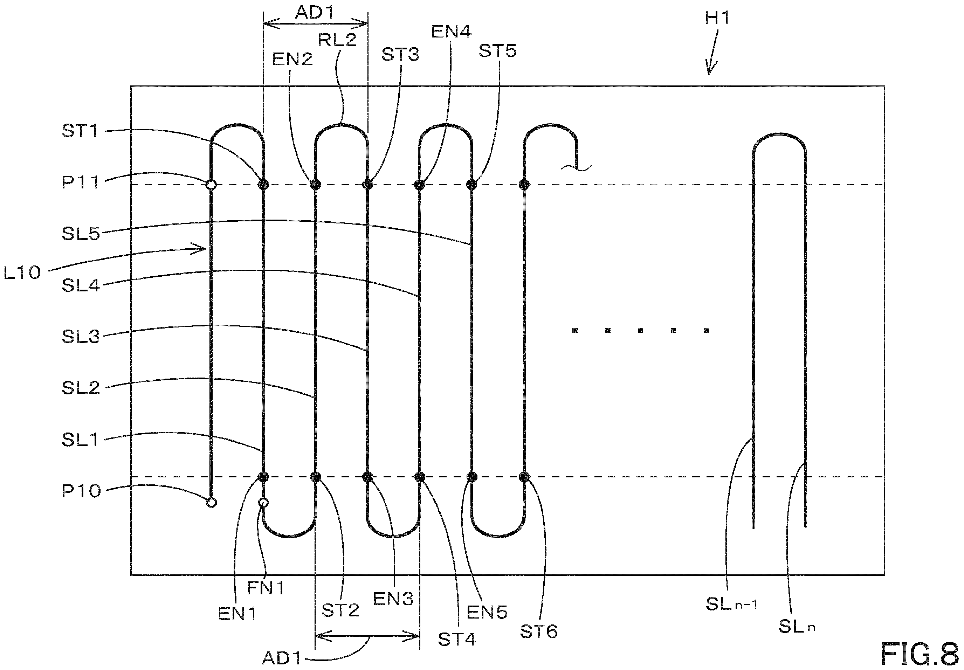

Now, as shown in FIG. 8, when working in the work field H1 in the tractor 1, the work is performed by repeating the straight line traveling and the turning, as shown in the traveling line L10. That is, when the tractor 1 approaches the footpath, the tractor 1 makes the turning and then travels straight, and when the tractor 1 approaches the opposite footpath, the tractor 1 makes the turning again and then travels straight.

In this manner, when performing work with the repeated turning, the automatic steering is performed on the straight-line portion SLn (n = 1, 2, 3...) of the travel line L10. For example, in the first straight-line portion SL1, the operator operates the steering changeover switch 52 to start the automatic steering at the start position ST1, and then the operator operates the steering changeover switch 52 while watching the traveling conditions to terminate the automatic steering at the end position EN1. The operator also performs the turning in manually steering the tractor 1 after terminating the automatic steering at the end position EN1, and in the second straight portion SL2, the operator starts the automatic steering at the start position ST2 by operating the steering changeover switch 52, and terminates the automatic steering at the end position EN2 by operating the steering changeover switch 52. That is, to perform the work with the tractor 1, it is necessary to start the automatic steering and terminate the automatic steering by repeating the operation of the steering changeover switch 52 during the tractor 1 is traveling in the straight-line portion SLn, while the operator is checking the traveling conditions.

As shown in FIG. 1, the tractor 1 is provided with a notifier device 80. The notifier device 80 is a device that issue notification when the tractor 1 (vehicle body 3) approaches the position for the start of the automatic steering or when the tractor 1 (vehicle body 3) approaches the position for the end of the automatic steering. The notifier device 80 is a speaker, a lamp, and the like, and is provided in the vicinity of the operator seat 10. In particular, the notifier device 80 notifies that the vehicle body 3 is approaching the shift position, which is the position of the vehicle body 3 when the steering changeover switch 52 is operated, shifted in the width direction of the vehicle body 3 relative to the switching position (a start position of the automatic steering and a termination position of the automatic steering) with use of a speaker to output audio output, a warning sound, a lamp to light up, blinking, and the like.

The following description explains in detail the relation between the notification by the notifier device 80, a start position of the automatic steering, an end position of the automatic steering, and the shift position.

As shown in FIG. 8, when a start position of the automatic steering is represented by a sign "STn", the start position STn of the automatic steering at the oddth number of linear portions SLn (n = 1, 3, 5...n) is lined up on one side in the work field (upper surface side of FIG. 8).

Here, at the start position STn on one side, the start of the automatic steering is a single skip of the straight-line portion SLn (n = 1, 2, 3...), so the shift position is n+2nd start position STn + 2 from the current start position STn (n = 1, 3, 5...). For example, with respect to the first start position ST1, the shift position will correspond to the start position ST3. In other words, the notifier device 80 will notify when the tractor 1 approaches the shift position corresponding to the third start position ST3, when the first start position ST1 is determined by the steering changeover switch 52. For example, when tractor 1 travels on line RL2 through end position EN2 and the tractor 1 approaches the third start position ST3 (shift position), the notifier device 80 issues notification. More specifically, when the command for the automatic steering is given by the steering changeover switch 52 at the first start position ST1, the first controller 60A maintains the detected position (vehicle body position) detected by the positioning device 40 and adds the amount of shifting (shift distance) AD1 in the width direction of the vehicle body 3 to the retained position (start position ST1). The shift position corresponding to the start position (the start corresponding position) is obtained by using the following method. The notifier device 80 performs the notification when the distance difference between the body position detected by the positioning device 40 and the start corresponding position is less than or equal to a predetermined value during the manual steering.

The start position STn of the automatic steering at the eventh number of straight portion line SLn (n = 2, 4, 6...) is lined up on the other side in the work field (lower side of the paper in FIG. 8). At the start position STn on the other side, the start corresponding position is STn + 2, which is the n+2nd start position STn + 2 in terms of the current start position STn (n = 2, 4, 6...). For example, with respect to the second start position ST2, the start correspondence position would correspond to the start position ST4.

In this case, when the second start position ST2 is determined by the steering changeover switch 52, the notifier device 80 issues notification when the tractor 1 approaches the start corresponding position, corresponding to the fourth start position ST4, when the second start position ST2 is determined by the steering changeover switch 52. More specifically, when the command for the automatic steering is given by the steering changeover switch 52 at the second start position ST2, the first controller portion 60A retains the detected position (body position) detected by the positioning device 40 and adds the amount of shifting (shift distance) AD1 in the width direction of the vehicle body 3 to the retained position (start position ST2). In this manner, the shift position (start corresponding position) corresponding to the start position is set. The notifier device 80 performs a notification when the distance difference between the body position detected by the positioning device 40 and the start corresponding position becomes less than a predetermined value during the manual steering.

The issuing interval of notification by the notifier device 80 should be changed according to the distance difference between the tractor 1 and the corresponding start position. For example, when the notifier device 80 outputs sound, the output interval of the sound indicating that it is approaching should be shortened when the distance difference is short and increased when the distance difference is long.

When the end position of the automatic steering is represented by a sign "ENn", the end position ENn of the automatic steering at the eventh number of linear portions SLn (n = 2, 4, 6...) is lined up on one side in the work field (top surface side of FIG. 8).

At the end position ENn on one side, the end of the automatic steering is skipped by one as well as the start, so the shift position is n + the second end position ENn + 2 from the current end position ENn (n = 2, 4, 6...). For example, with respect to the second end position EN2, the shift position will correspond to the end position EN4. In other words, the notifier device 80 will notify when the tractor 1 approaches the shift position corresponding to the fourth end position EN4, when the second end position EN2 is determined by the steering changeover switch 52. For example, when tractor 1 travels in the straight line portion SL4 and the tractor 1 approaches the fourth end position EN4 (shift position), the notifier device 80 issues notification when the tractor 1 approaches the fourth end position EN4. More specifically, when the command for the automatic steering is given by the steering changeover switch 52 at the second end position EN2, the first controller portion 60A retains the detected position (body position) detected by the positioning device 40 and adds the amount of shift (shift distance) AD1 in the width direction of the vehicle body 3 to the retained position (end position EN2). In this manner, the shift position (end corresponding position) is set to the shift position corresponding to the end position. The notifier device 80 performs a notification when the distance difference between the body position detected by the positioning device 40 and the end corresponding position is less than or equal to a predetermined value during the manual steering.

The end position ENn of the automatic steering at the oddth number of straight line portion SLn (n=1, 3, 5...) is lined up on the other side in the work field (lower side of the paper in FIG. 8). At the end position ENn on the other side, the end corresponding position is also the n+2nd end position ENn+2 in terms of the current end position ENn (n = 1, 3, 5...). For example, with respect to the first end position EN1, the end corresponding position corresponds to the end position EN3.

In this case, when the first end position EN1 is determined by the steering changeover switch 52, the notifier device 80 issues notification when the tractor 1 approaches the corresponding end position corresponding to the third end position EN3, when the first end position EN1 is determined by the steering changeover switch 52. More specifically, when the command for the automatic steering is given by the steering changeover switch 52 at the first end position EN1, the first controller portion 60A retains the detected position (body position) detected by the positioning device 40 and adds the amount of shift (shift distance) AD1 in the width direction of the vehicle body 3 to the retained position (end position EN1). In this manner, the end-responsive position is obtained. The notifier device 80 performs the notification when the distance difference between the body position detected by the positioning device 40 and the end corresponding position is less than or equal to a predetermined value during manual steering.

The issuing interval of notification by the notifier device 80 should be changed according to the distance difference between the tractor 1 and the end corresponding position. For example, when the notifier device 80 outputs sound, the output interval of the sound indicating that it is approaching is shortened when the distance difference is short and lengthened when the distance difference is long.

In the above-mentioned embodiment, the notification is made when the tractor 1 is approaching the end corresponding position, but as shown in FIG. 8, the notification may be issued when the tractor 1 is approaching the shift position FN1 where the start P10 is shifted in the width direction of the machine body.

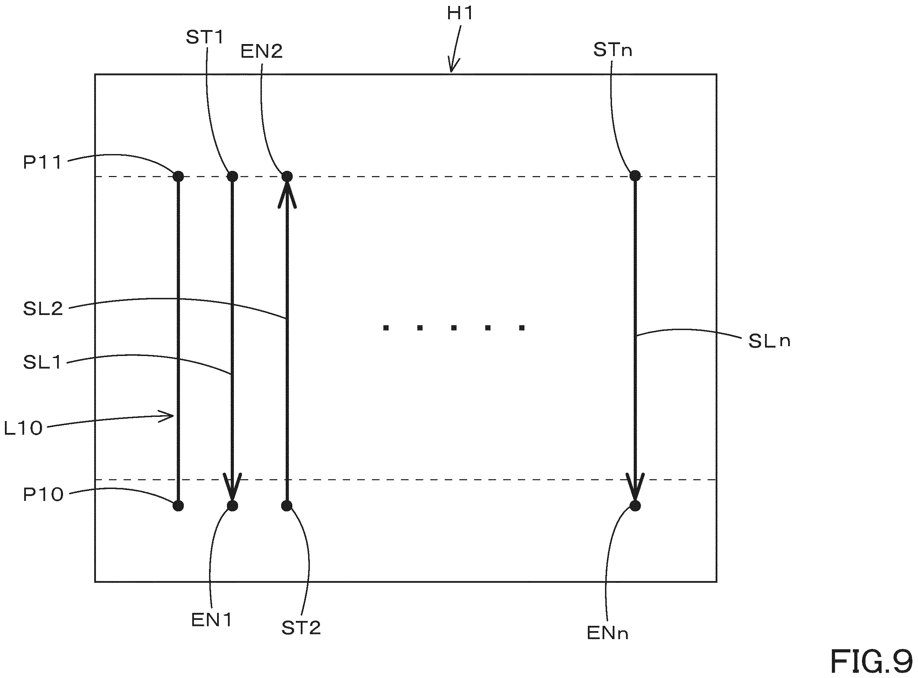

Now, the tractor 1 is provided with a storage device 81. The storage device 81 is a storage device that stores the position of the tractor 1 (the start position STn, the end position ENn) when switched to the start or end of the automatic steering by the steering changeover switch 52, that is, the detected position (body position) detected by the positioning device 40. The storage device 81 may be built into the controller portion 60 or the display device 45, or it may be a separate device. In the above-described embodiment, the tractor 1 performs work while repeatedly traveling straight and turning while traveling forward, but depending on the work, the tractor 1 may perform work while repeatedly traveling forward and backward, as shown in FIG. 9. In response to such cases, the storage device 81 may store the end position of the tractor 1 (vehicle body 3) immediately before the backward movement when the tractor 1 (vehicle body 3) has advanced a predetermined distance after starting the backward movement.

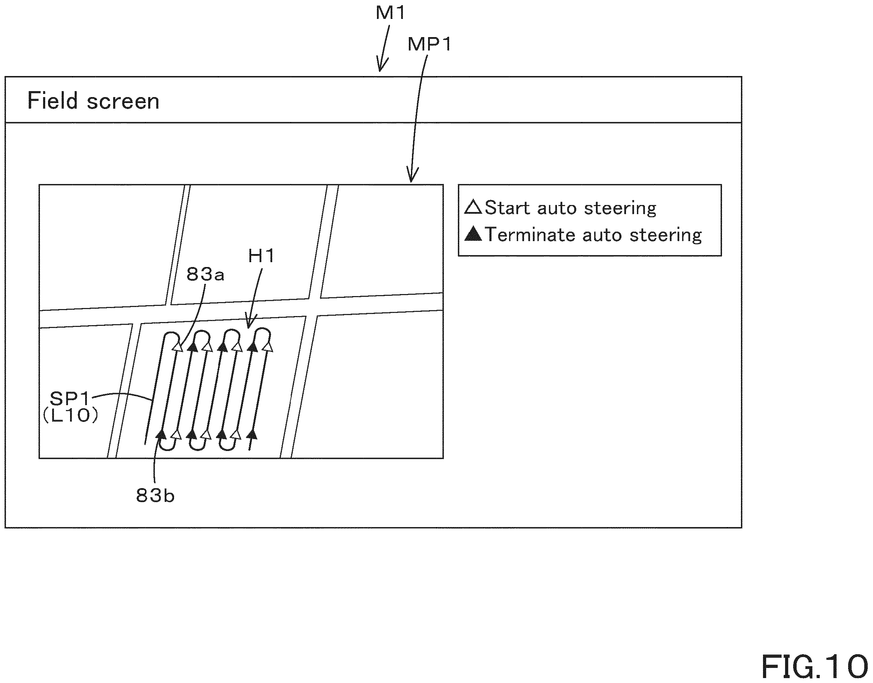

The display device 45 displays the start position STn and end position ENn stored in the storage device 81 on a map MP1 showing the work area of the tractor 1, that is, the work field. As shown in FIG. 10, when a predetermined operation is performed on the display device 45, the display device 45 displays the field screen M 1. The field screen M1 displays the current work field H1 in which the tractor 1 is working, as well as the detection position SP1 (traveling line L10) detected by the positioning device 40. The display device 45 also displays the start position STn and end position ENn in the current work field H1, referring to the storage device 81. For example, the display device 45 displays a symbol 83a indicating the start position STn and a symbol 83b indicating the end position ENn superimposed on the field map MP1 in the field screen M1.

In the above-described embodiment, the vehicle is informed when the tractor 1 approaches a start corresponding position corresponding to the start position STn of the automatic steering and an end corresponding position corresponding to the end position ENn of the automatic steering, but the tractor 1 may also be informed when the tractor 1 approaches either the start corresponding position or the end corresponding position.

The working vehicle 1 includes the steering handle 30, the vehicle body 3 capable of traveling either in the manual steering by the steering handle 30 or in the automatic steering of the steering handle 30 based on the traveling reference line L1, the steering changeover switch 52 to switch either the start or the end of the automatic steering, and the notifier device 80 configured to issue notification that the vehicle body 3 is approaching a shift position shifted in the width direction of the vehicle body 3 with respect to the changeover position of the vehicle body 3 when the steering changeover switch 52 is operated. According to this configuration, the notification of the notifier device 80 enables the operator (driver) to know at least the shift position corresponding to the switching position of the vehicle body 3 when the steering changeover switch 52 is operated, so that the operator can easily change the start or end of the automatic steering.

The working vehicle 1 is provided with the controller portion 60A that sets the end position of the vehicle body 3 when the steering changeover switch 52 is switched to the end of the automatic steering as the switching position and the end corresponding position shifted from the end position in the width direction of the vehicle body 3 as the shift position, and the notifier device 80 notifies when the vehicle body 3 approaches the end corresponding position. According to this configuration, since the notifier device 80 issues notification that the vehicle body 3 is approaching the end corresponding position for the automatic steering, the operator (driver) can easily terminate the automatic steering at least in accordance with the end corresponding position where the automatic steering was last terminated.

The working vehicle 1 has the storage device 81 that stores the end position when the vehicle body 3 has advanced a predetermined distance after starting to move backward. This allows the end position to be stored, making it easier to determine, for example, at what end position to end when working with a working device while moving backward (work in backward traveling).

The working vehicle 1 is provided with the controller portion 60A that sets the start position of the vehicle body 3 when the steering changeover switch 52 is switched to the start of the automatic steering as the switching position, and the start corresponding position shifted from the start position in the width direction of the vehicle body 3 as the shift position, and the notifier device 80 issues notification when the vehicle body 3 approaches the start corresponding position. According to this configuration, since the notifier device 80 notifies that the vehicle body 80 is approaching the start corresponding position corresponding to the start of the automatic steering, it is easy for the operator (driver) to start the automatic steering in accordance with the start corresponding position at which the automatic steering has started.

The working vehicle 1 is provided with the display device 45 that displays the position of the switching position on a map showing the work area. According to this configuration, the starting or ending position can be easily confirmed by the display device.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims, and is intended to include all modifications within a scope of the claims.

### Reference numerals

- 1: Working vehicle
- 3: Vehicle body
- 30: Steering handle
- 45: Display device
- 52: Steering switch
- 60A: Controller device (first controller device)
- 80: Notifier device
- 81: Storage device

## Claims

1. A working vehicle (1), comprising:
- a steering handle (30);
- a vehicle body (3) configured to travel with either manual steering by the steering handle (30) or automatic steering of the steering handle (30) performed so that a position of the vehicle body (3) coincides with a scheduled traveling line (L2) including straight-line portions (SLn) which are straight lines parallel to a traveling reference line (L1); and
- a steering switch (52) configured to switch the automatic steering between to be started and to be terminated,
the working vehicle (1) being **characterized by** comprising:
- a controller (60) configured to set, as a termination corresponding position for the automatic steering, a shift position (ENn+2) shifted from a termination position (ENn) of the automatic steering by a shift distance (AD1) in a width direction of the vehicle body (3), the termination position (ENn) being a position of the vehicle body (3) where the steering switch (52) is switched to terminate the automatic steering, the shift distance (AD1) being a distance in the width direction from the termination position (ENn) on one of the straight-line portions (SLn) to another of the straight-line portions (SLn+2) that is two lines away from the one of the straight-line portions (SLn); and
- a notifier device (80) configured to notify that the vehicle body (3) approaches the termination corresponding position.

2. The working vehicle (1) according to claim 1, wherein
- the controller (60) is configured to set, as a starting corresponding position for the automatic steering, a shift position (STn+2) shifted from a starting position (STn) of the automatic steering by a shift distance (AD1) in the width direction of the vehicle body (3), the starting position (STn) being a position of the vehicle body (3) where the steering switch (52) is switched to start the automatic steering, the shift distance (AD1) being a distance in the width direction from the starting position (STn) on one of the straight-line portions (SLn) to another of the straight-line portions (SLn+2) that is two lines away from the one of the straight-line portions (SLn), and
- the notifier device (80) notifies that the vehicle body (3) approaches the starting corresponding position.

3. The working vehicle (1) according to claim 1, comprising a storage device (81) configured to store the termination position (ENn) when the vehicle body (3) travels in a predetermined distance after starting traveling backward.

4. The working vehicle (1) according to claim 1 or 3, comprising a display device (45) configured to display the termination position (ENn) of the automatic steering on a map (MP1) that represents work fields.

5. The working vehicle (1) according to claim 2, comprising a display device (45) configured to display the starting position (STn) of the automatic steering on a map (MP1) that represents work fields.

6. A method for operating a working vehicle (1) having
- a steering handle (30),
- a vehicle body (3) configured to travel with either manual steering by the steering handle (30) or automatic steering of the steering handle (30) performed so that a position of the vehicle body (3) coincides with a scheduled traveling line (L2) including straight-line portions (SLn) which are straight lines parallel to a traveling reference line (L1), and
- a steering switch (52) configured to switch the automatic steering between to be started and to be terminated,
the method being **characterized by** comprising:
- by a controller (60), setting, as a termination corresponding position for the automatic steering, a shift position (ENn+2) shifted from a termination position (ENn) of the automatic steering by a shift distance (AD1) in a width direction of the vehicle body (3), the termination position (ENn) being a position of the vehicle body (3) where the steering switch (52) is switched to terminate the automatic steering, the shift distance (AD1) being a distance in the width direction from the termination position (ENn) on one of the straight-line portions (SLn) to another of the straight-line portions (SLn+2) that is two lines away from the one of the straight-line portions (SLn); and
- by a notifier device (80), notifying that the vehicle body (3) approaches the termination corresponding position.

7. The method according to claim 6, comprising:
- by the controller (60), setting, as a starting corresponding position for the automatic steering, a shift position (STn+2) shifted from a starting position (STn) of the automatic steering by a shift distance (AD1) in the width direction of the vehicle body (3), the starting position (STn) being a position of the vehicle body (3) where the steering switch (52) is switched to start the automatic steering, the shift distance (AD1) being a distance in the width direction from the starting position (STn) on one of the straight-line portions (SLn) to another of the straight-line portions (SLn+2) that is two lines away from the one of the straight-line portions (SLn), and
- by the notifier device (80), notifying that the vehicle body (3) approaches the starting corresponding position.

8. The method according to claim 6, comprising storing, by a storage device (81), the termination position (ENn) when the vehicle body (3) travels in a predetermined distance after starting traveling backward.

9. The method according to claim 6 or 8, comprising displaying, by a display device (45), the termination position (ENn) of the automatic steering on a map (MP1) that represents work fields.

10. The method according to claim 7, comprising displaying, by a display device (45), the starting position (STn) of the automatic steering on a map (MP1) that represents work fields.

## Patentansprüche

1. Arbeitsfahrzeug (1), umfassend:
- ein Lenkrad (30);
- eine Fahrzeugkarosserie (3), die eingerichtet ist, entweder mit manuellem Lenken durch das Lenkrad (30) oder automatischem Lenken des Lenkrads (30) zu fahren, das so durchgeführt wird, dass eine Position der Fahrzeugkarosserie (3) mit einer geplanten Fahrlinie (L2) mit geradlinigen Abschnitten (SLn), welche gerade Linien parallel zu einer Fahrreferenzlinie (L1) sind, übereinstimmt; und
- einen Lenkschalter (52), der eingerichtet ist, das automatische Lenken zwischen Starten und Beenden zu schalten,
wobei das Arbeitsfahrzeug (1) **dadurch gekennzeichnet ist, dass** es Folgendes umfasst:
- eine Steuerung (60), die eingerichtet ist, als eine Endentsprechungsposition für das automatische Lenken eine Verschiebungsposition (ENn+2) festzulegen, die von einer Endposition (ENn) des automatischen Lenkens um eine Verschiebungsdistanz (AD1) in einer Breitenrichtung der Fahrzeugkarosserie (3) verschoben ist, wobei die Endposition (ENn) eine Position der Fahrzeugkarosserie (3) ist, wo der Lenkschalter (52) geschaltet wird, um das automatische Lenken zu beenden, wobei die Verschiebungsdistanz (AD1) eine Distanz in der Breitenrichtung von der Endposition (ENn) auf einem der geradlinigen Abschnitte (SLn) zu einem anderen der geradlinigen Abschnitte (SLn+2) ist, der zwei Linien von dem einen der geradlinigen Abschnitte (SLn) entfernt ist; und
- eine Mitteilungsvorrichtung (80), die eingerichtet ist, mitzuteilen, dass sich die Fahrzeugkarosserie (3) der Endentsprechungsposition nähert.

2. Arbeitsfahrzeug (1) nach Anspruch 1, wobei
- die Steuerung (60) eingerichtet ist, als eine Startentsprechungsposition für das automatische Lenken eine Verschiebungsposition (STn+2) festzulegen, die von einer Startposition (STn) des automatischen Lenkens um eine Verschiebungsdistanz (AD1) in der Breitenrichtung der Fahrzeugkarosserie (3) verschoben ist, wobei die Startposition (STn) eine Position der Fahrzeugkarosserie (3) ist, wo der Lenkschalter (52) geschaltet wird, um das automatische Lenken zu starten, wobei die Verschiebungsdistanz (AD1) eine Distanz in der Breitenrichtung von der Startposition (STn) auf einem der geradlinigen Abschnitte (SLn) zu einem anderen der geradlinigen Abschnitte (SLn+2) ist, der zwei Linien von dem einen der geradlinigen Abschnitte (SLn) entfernt ist, und
- die Mitteilungsvorrichtung (80) mitteilt, dass sich die Fahrzeugkarosserie (3) der Startentsprechungsposition nähert.

3. Arbeitsfahrzeug (1) nach Anspruch 1, umfassend eine Speichervorrichtung (81), die eingerichtet ist, die Endposition (ENn) zu speichern, wenn die Fahrzeugkarosserie (3) in einer vorbestimmten Distanz nach dem Starten des Rückwärtsfahrens fährt.

4. Arbeitsfahrzeug (1) nach Anspruch 1 oder 3, umfassend eine Anzeigevorrichtung (45), die eingerichtet ist, die Endposition (ENn) des automatischen Lenkens auf einer Karte (MP1) anzuzeigen, die Arbeitsfelder darstellt.

5. Arbeitsfahrzeug (1) nach Anspruch 2, umfassend eine Anzeigevorrichtung (45), die eingerichtet ist, die Startposition (STn) des automatischen Lenkens auf einer Karte (MP1) anzuzeigen, die Arbeitsfelder darstellt.

6. Verfahren zum Betreiben eines Arbeitsfahrzeugs (1) mit
- einem Lenkrad (30),
- einer Fahrzeugkarosserie (3), die eingerichtet ist, entweder mit manuellem Lenken durch das Lenkrad (30) oder automatischem Lenken des Lenkrads (30) zu fahren, das so durchgeführt wird, dass eine Position der Fahrzeugkarosserie (3) mit einer geplanten Fahrlinie (L2) mit geradlinigen Abschnitten (SLn), welche gerade Linien parallel zu einer Fahrreferenzlinie (L1) sind, übereinstimmt, und
- einem Lenkschalter (52), der eingerichtet ist, das automatische Lenken zwischen Starten und Beenden zu schalten,
wobei das Verfahren **dadurch gekennzeichnet ist, dass** es Folgendes umfasst:
- durch eine Steuerung (60), Festlegen, als eine Endentsprechungsposition für das automatische Lenken, einer Verschiebungsposition (ENn+2), die von einer Endposition (ENn) des automatischen Lenkens um eine Verschiebungsdistanz (AD1) in einer Breitenrichtung der Fahrzeugkarosserie (3) verschoben ist, wobei die Endposition (ENn) eine Position der Fahrzeugkarosserie (3) ist, wo der Lenkschalter (52) geschaltet wird, um das automatische Lenken zu beenden, wobei die Verschiebungsdistanz (AD1) eine Distanz in der Breitenrichtung von der Endposition (ENn) auf einem der geradlinigen Abschnitte (SLn) zu einem anderen der geradlinigen Abschnitte (SLn+2) ist, der zwei Linien von dem einen der geradlinigen Abschnitte (SLn) entfernt ist; und
- durch eine Mitteilungsvorrichtung (80), Mitteilen, dass sich die Fahrzeugkarosserie (3) der Endentsprechungsposition nähert.

7. Verfahren nach Anspruch 6, umfassend:
- durch die Steuerung (60), Festlegen, als eine Startentsprechungsposition für das automatische Lenken, einer Verschiebungsposition (STn+2), die von einer Startposition (STn) des automatischen Lenkens um eine Verschiebungsdistanz (AD1) in der Breitenrichtung der Fahrzeugkarosserie (3) verschoben ist, wobei die Startposition (STn) eine Position der Fahrzeugkarosserie (3) ist, wo der Lenkschalter (52) geschaltet wird, um das automatische Lenken zu starten, wobei die Verschiebungsdistanz (AD1) eine Distanz in der Breitenrichtung von der Startposition (STn) auf einem der geradlinigen Abschnitte (SLn) zu einem anderen der geradlinigen Abschnitte (SLn+2) ist, der zwei Linien von dem einen der geradlinigen Abschnitte (SLn) entfernt ist, und
- durch die Mitteilungsvorrichtung (80), Mitteilen, dass sich die Fahrzeugkarosserie (3) der Startentsprechungsposition nähert.

8. Verfahren nach Anspruch 6, umfassend das Speichern, durch eine Speichervorrichtung (81), der Endposition (ENn), wenn die Fahrzeugkarosserie (3) in einer vorbestimmten Distanz nach dem Starten des Rückwärtsfahrens fährt.

9. Verfahren nach Anspruch 6 oder 8, umfassend das Anzeigen, durch eine Anzeigevorrichtung (45), der Endposition (ENn) des automatischen Lenkens auf einer Karte (MP1), die Arbeitsfelder darstellt.

10. Verfahren nach Anspruch 7, umfassend das Anzeigen, durch eine Anzeigevorrichtung (45), der Startposition (STn) des automatischen Lenkens auf einer Karte (MP1), die Arbeitsfelder darstellt.

## Revendications

1. Véhicule de travail (1), comprenant :
- une poignée de direction (30) ;
- une carrosserie de véhicule (3) configurée pour se déplacer soit avec une direction manuelle par la poignée de direction (30), soit avec une direction automatique de la poignée de direction (30) réalisée de telle sorte qu'une position de la carrosserie de véhicule (3) coïncide avec une ligne de déplacement programmée (L2) comprenant des parties de ligne droite (SLn) qui sont des lignes droites parallèles à une ligne de référence de déplacement (L1) ; et
- un commutateur de direction (52) configuré pour commuter la direction automatique entre être démarré et devant être arrêté, le véhicule de travail (1) étant **caractérisé en ce qu'**il comprend :
- un contrôleur (60) configuré pour régler, en tant que position correspondante de fin pour la direction automatique, une position de changement de vitesse (ENn+2) décalée depuis une position de fin (ENn) de la direction automatique par une distance de changement de vitesse (AD1) dans la direction de largeur de la carrosserie (3), la position finale (ENn) étant une position de la carrosserie (3), où le commutateur de direction (52) est commuté pour mettre fin à la direction automatique, la distance de changement de vitesse (AD1) étant une distance dans la direction de largeur depuis la position de fin (ENn) sur une des parties de ligne droite (SLn) jusqu'à une autre des parties de ligne droite (SLn+2) qui se trouve à deux lignes de celle des parties de ligne droite (SLn); et
- un dispositif de notification (80) configuré pour notifier que la carrosserie du véhicule (3) s'approche de la position de fin correspondante.

2. Véhicule de travail (1) selon la revendication 1, dans lequel
- le contrôleur (60) est configuré pour régler, comme position correspondante de départ pour la direction automatique, une position de changement de vitesse (STn+2) décalée d'une position de départ (STn) de la direction automatique d'une distance de changement de vitesse (AD1) dans la direction de la largeur de la carrosserie de véhicule (3), la position de départ (STn) étant une position de la carrosserie de véhicule (3) dans laquelle le commutateur de direction (52) est commuté pour démarrer la direction automatique, la distance de changement de vitesse (AD1) étant une distance dans la direction de largeur depuis la position de départ (STn) sur une des parties de ligne droite (SLn) jusqu'à une autre des parties de ligne droite (SLn+2) qui sont à deux lignes de celle des parties de ligne droite (SLn), et
- le dispositif de notification (80) notifie que la carrosserie du véhicule (3) s'approche de la position de départ correspondante.

3. Véhicule de travail (1) selon la revendication 1, comprenant un dispositif de mémorisation (81) configuré pour mémoriser la position de fin (ENn) lorsque la carrosserie (3) du véhicule se déplace sur une distance prédéterminée après avoir commencé à reculer.

4. Véhicule de travail (1) selon la revendication 1 ou 3, comprenant un dispositif d'affichage (45) configuré pour afficher la position de fin (ENn) du direction automatique sur une carte (MP1) représentant les champs de travail.

5. Véhicule de travail (1) selon la revendication 2, comprenant un dispositif d'affichage (45) configuré pour afficher la position de départ (STn) de la direction automatique sur une carte (MP1) représentative des champs de travail.

6. Procédé pour faire fonctionner un véhicule de travail (1) ayant
- une poignée de direction (30),
- une carrosserie de véhicule (3) configurée pour se déplacer soit avec une direction manuelle par la poignée de direction (30), soit avec une direction automatique de la poignée de direction (30) réalisée de telle sorte qu'une position de la carrosserie de véhicule (3) coïncide avec une ligne de déplacement programmée (L2) comprenant des parties de ligne droite (SLn) qui sont des lignes droites parallèles à une ligne de référence mobile (L1), et
- un commutateur de direction (52) configuré pour commuter la direction automatique entre le démarrage et la fin, le procédé étant **caractérisé en ce qu'**il comprend de :
- régler, par un contrôleur (60), comme position correspondante de fin pour la direction automatique, une position de changement de vitesse (ENn+2) décalée depuis une position de fin (ENn) de la direction automatique par une distance de changement de vitesse (AD1) dans la direction de largeur de la carrosserie du véhicule (3), la position de fin (ENn) étant une position de la carrosserie (3) du véhicule où le commutateur de direction (52) est commuté pour terminer la direction automatique, la distance de changement de vitesse (AD1) étant une distance dans la direction de largeur à partir de la position de fin (ENn) sur une des parties de ligne droite (SLn) à une autre des parties de ligne droite (SLn+2) qui est à deux lignes de celle des parties de ligne droite (SLn) ; et
- par un dispositif de notification (80), notifier que la carrosserie du véhicule (3) s'approche de la position de fin correspondante.

7. Procédé selon la revendication 6, comprenant de :
- par le contrôleur (60), régler, comme position correspondante de départ pour la direction automatique, une position de changement de vitesse (STn+2) décalée depuis une position de départ (STn) de la direction automatique d'une distance de changement de vitesse (AD1) dans la direction de largeur de la carrosserie (3), la position de départ (STn) étant une position de la carrosserie du véhicule (3) où le commutateur de direction (52) est commuté pour démarrer la direction automatique, la distance de changement de vitesse (AD1) étant une distance dans la direction de largeur à partir de la position de départ (STn) sur une des parties de ligne droite (SLn) à une autre des parties de ligne droite (SLn+2) qui est à deux lignes de celle des parties de ligne droite (SLn), et
- par le dispositif de notification (80), notifier que la carrosserie du véhicule (3) se rapproche de la position de départ correspondante.

8. Procédé selon la revendication 6, comprenant la mémorisation, par un dispositif de mémorisation (81), de la position finale (ENn) lorsque la carrosserie (3) du véhicule se déplace sur une distance prédéterminée après avoir commencé à reculer.

9. Procédé selon la revendication 6 ou 8, comprenant l'affichage, par un dispositif d'affichage (45), de la position de fin (ENn) de la direction automatique sur une carte (MP1) représentative des champs de travail.

10. Procédé selon la revendication 7, **caractérisé en ce qu'**il consiste à afficher, par un dispositif d'affichage (45), la position de départ (STn) de la direction automatique sur une carte (MP1) représentative des champs de travail.
